# EUROPEAN PATENT SPECIFICATION

(11) **EP 3 244 568 B1**
(45) Date of publication and mention of the grant of the patent: **09.01.2019**
(21) Application number: 16169594.5
(22) Date of filing: 13.05.2016
(51) Int. Cl.: H04L 9/32, G07C 9/00

(54) **ELECTRONIC LOCKING SYSTEM**
ELEKTRONISCHES VERRIEGELUNGSSYSTEM
SYSTÈME DE VERROUILLAGE ÉLECTRONIQUE

(43) Date of publication of application: 15.11.2017
(73) Proprietor: Talenta s.r.o., 821 08 Bratislava (SK)
(72) Inventor: Adam, Martin, 831 04 Bratislava (SK); Sefara, Michal, 931 01 Samorin (SK)
(74) Representative: Gulde & Partner

(56) References cited:
- US-A1- 2007 043 949
- US-A1- 2013 127 593
- US-A1- 2015 318 986
- US-A1- 2016 036 594

## Description

### FIELD OF INVENTION

The present invention relates generally to an electronic lock for an electronic locking system and to a method of operating such an electronic lock.

An electronic locking system in general comprises at least one electronic lock that is operable by means of an electronic locking device. The lock can e.g. be an electronic door lock. Different mobile devices can act as electronic key device, e.g. a smart card, a smart phone, a tablet computer, and the like. Preferably, the communication between the key device and the lock is wireless, using one of the standard wireless communication protocols, such as Bluetooth, RFID, WiFi, etc. The locking system can further include a locking system managing server, in particular for managing the locks and key devices that form part of the system as well as the data involved in the system operation, such as electronic keys, electronic certificates, access rights, etc. The managing server is generally configured to communicate with a lock and a key device, e.g. over a suitable communication network, such as the internet.

### BACKGROUND OF THE INVENTION

At present, different types of electronic locking systems are known. This includes simple solutions where a lock includes a white list of key IDs. The lock is supposed to only accept key IDs identified in this list for operating the lock. A key device in such a system, e.g. a chip card, generally comprises only a simple chip with a single key ID that is transmitted to the lock in order to operate, in particular to open the lock. More sophisticated systems make further use of cryptographic solutions.

The former systems are far from being really secure, as a key ID is easily readable and replicable by an attacker. The latter systems can overcome this drawback, e.g. by encrypting the communication between a lock and a key device. However, these systems are still quite vulnerable, in particular, in case at least one party (lock, key device, or managing system) is compromised.

According to US 2013/0127593 A1, an authentication server for a wireless lock system comprising a wireless lock and a key device is configured to receive and authenticate a validation message. The validation message is created at the wireless lock from a secret key contained in the wireless lock. The authentication server receives the validation message from the key device, receives a certificate of ownership provided by the user, and authenticates the validation message and key device using copies each stored in a database of the authentication server. The authentication is configured to associate the user with the lock ID upon successfully authenticating the validation message, thereby enabling the authorizations server to provide the user with digital credentials to open the lock.

US 2016/0036594 A1 discloses methods, systems, and computer-readable media for wireless key management for authentication. Authentication includes transmitting a request to a locking device, transmitting a security challenge to the mobile device, and transmitting a response to the challenge and an encrypted user profile for the locking device. The response includes data generated with an access key that is stored by both the mobile device and the locking device, and the user profile is encrypted by a server using a secret key that is stored by the server and the locking device. Authentication further includes verifying the response to the challenge, where the response is verified using the access key, and validating additional data from the mobile device. An action of the locking device may be initiated as specified by the request.

It is therefore an object of the present invention to suggest an electronic locking system and a method of operating same having improved security.

### SUMMARY OF THE INVENTION

In accordance with one aspect of the present invention there is provided a method of operating an electronic lock in an electronic locking system. The electronic locking system comprises an electronic lock that is operable by an electronic key device. The electronic locking system further comprises a locking system managing server. This managing server is configured to communicate with the lock.

The method comprises the following steps of:
- generating an owner certificate identifying an owner of the electronic lock;
- generating a server certificate identifying the locking system managing server;
- configuring the lock so as to recognize the owner certificate and the server certificate, and
- operating the lock by sending a control command to the lock.

The lock rejects any control command that is not associated with both the owner certificate and the server certificate.

An electronic lock can be any electronically operable physical lock, such as an electronic door lock. Alternatively, in the context of the present invention, an electronic lock can be any electronic device or software module that is configured to grant (or reject) access to any kind of restricted resource.

An electronic key device is an electronic device, such as a chip card, a smart phone, a tablet computer, or the like, that is configured to operate the electronic lock, in particular via suitable control commands that are sent to the lock by the electronic key device. Preferably, the communication between the electronic lock and the electronic key device is carried out wirelessly, using standard communication protocols, such as Bluetooth, RFID, WiFi, etc.

A locking system managing server includes one or more computing devices, such a microcontroller, a common personal computer or a main frame computer. The managing server is generally configured to directly or indirectly communicate with the electronic lock and with an electronic key device, preferably over the internet or any other suitable communication network. The electronic key device can be configured to relay a communication between the lock and the managing server. The managing server is configured to provide the basic services that are necessary to manage electronic locks and electronic key devices associates with the electronic locking system. Preferably, the managing server can be accessed, e.g. by a lock owner or a lock user, via a graphical user interface or API. In general, a lock owner and a lock user are registered at the managing server and can, after registration, log on the managing server, in order to carry out different task as described below, such as managing the lock, generating derived key certificates, and the like.

In connection with the present invention, an electronic datum, such as an above-mentioned control command, is meant to be associated with the server certificate in case the electronic datum is directly or indirectly signed by means of the server certificate, i.e. directly signed with a private key corresponding to the server certificate or signed by means of a further certificate (i.e. signed by a private key corresponding to the further certificate), which further certificate is in turn directly signed by means of the server certificate. A below described key certificate or derived key certificate can serve as such a further certificate.

Further, in connection with the present invention, an electronic datum, such as an above-mentioned control command, is meant to be associated with the owner certificate in case the electronic datum is directly signed by means of the owner certificate, i.e. signed with a private key corresponding to the owner certificate. However, in connection with the present invention, the electronic datum is also meant to be associated with the owner certificate in case the electronic datum is signed by means of a further certificate (i.e. signed by a private key corresponding to the further certificate), which further certificate includes the owner certificate in its chain of trust. I.e. the further certificate is directly or indirectly, via a chain of certificates, signed by the owner certificate. Again, a below described key certificate or derived key certificate can serve as such a further certificate.

Needless to say, that an electronic locking system can include a plurality of locks, which locks can be owned by the same or by different owners. One and the same owner certificate can be used to indicate ownership with respect to a plurality of electronic locks. On the other hand, one electronic lock can be owned by more than one owner, i.e. can be configured to accept different owner certificates.

According to an embodiment, the owner certificate and the server certificate are generated in the form of generally known public key certificates. A public key of a public key certificate forms part of an asymmetric key pair including the public key and a corresponding private key.

According to an embodiment, the key pair corresponding to the owner certificate is generated on an electronic owner device and is stored in the electronic owner device. Preferably, the private key corresponding to the owner certificate is securely stored in the owner device and never leaves the electronic owner device. To that end, the owner device can include a security element, such as a SIM/UICC-card, a TPM, or the like. By securely storing the private key corresponding to the owner certificate on the electronic owner device, the lock, which can only be operated by commands associated with the owner device, is indirectly coupled to the electronic owner device.

According to a preferred embodiment, the electronic owner device is a smart card or a smart token including a security element for securely storing the private key of the owner certificate. However, other suitable devices may server as owner device, such as a smart phone, smart watch, or the like.

According to an embodiment, the electronic lock is configured so as to recognize the owner certificate and the server certificate by storing at least part of the owner certificate and at least part of the server certificate in a memory of the lock. Preferably, at least a public key corresponding to the owner certificate and at least a public key corresponding to the server certificate are stored in the memory of the lock as the parts of the respective certificates, which parts enable the lock to recognize the respective certificates.

As already indicated, the electronic lock of the electronic locking system is configured to be operated by an electronic key device. The electronic key device, e.g. in the form of a smart card, a smart phone, a tablet computer, or the like, is configured to send a control command to the lock in order to operate the lock, in particular to open the lock. The control command has to be associated with the server certificate and the owner certificate in order to be accepted by the lock. Basically, any control command can directly be signed by means of the owner certificate and the server certificate. However, to that end, a respective key device issuing the control command would have to include both the owner certificate and the server certificate, which is not desirable with respect to the security architecture of the electronic locking system.

The electronic locking system is meant to support three different roles or parties, namely an owner of a lock, a user of the respective lock, and a provider of the locking system managing server. While basically, e.g. in case of private use, these roles can be played by one and the same party (e.g. a private home-user maintaining its own home-server); in general, a lock owner differs from the primary user of the lock, which both differ from the provider of the locking system managing server. According to a preferred use case, the lock owner can be an owner of a building, the lock user can be a tenant of the building, the and the locking system managing server can be provided by a third party.

The architecture of the locking system ensures that any command that is accepted by a lock of the locking system has to be associated with both the owner certificate and the server certificate, meaning that neither the owner of the lock nor the provider of the locking system managing server can operate the lock without approval of the other party.

In order to allow a user of a lock to operate the lock, a so called key certificate can be generated. The key certificate is first generated in the form of a public key certificate. Then, the key certificate is electronically signed using the owner certificate and the server certificate. Once a user possesses such a key certificate with respect to a specific lock, e.g. stored on a suitable electronic key device, the user can operate the lock, because he can sign any control command sent to the lock by means of the key certificate. The lock will accept such a command as being associated by both the owner certificate and the server certificate, because the key certificate is directly signed by means of the owner certificate and the server certificate.

According to an embodiment, a key certificate further includes metadata, such as key privileges and/or access rights.

Key privileges can e.g. define whether or not a respective key certificate, and if yes, to which extent, can validly be used to sign below defined derived key certificates.

Access rights can e.g. be used to define regional or temporal restrictions with respect to a key certificate. E.g. in case the key certificate is signed by an owner certificate that is associated with a plurality of locks of a building, the key certificate basically allows to operate all these locks. However, the building can be divided into several zones (floors, rooms, etc.) and the access rights of the key certificate can define that only locks within predefined zones can be operated by the key certificate. Alternatively or additionally, temporal access rights can define that by means of the key certificate a specific lock can only be opened during a specific time frame, e.g. only on working days, from 9am to 5pm. Further, a period of validity of the key certificate can be defined by means of access rights.

In order to further enhance the usability of the electronic locking system, according to an embodiment, so called derived keys can be generated. The concept of derived keys allow a user of a key certificate to in some sense "share" this key certificate.

A derived key certificate, just like a key certificate, is generated in the form of a public key certificate. In contrast to a key certificate, the derived key certificate is electronically signed using a key certificate instead of the owner certificate. Like the key certificate, the derived key certificate is also electronically signed using the server certificate.

According to a preferred embodiment, as already mentioned above with respect to the owner certificate, a key pair corresponding to a certificate in the form of a public key certificate, is always generated on the device on which it is used later on in connection with the method of operating an electronic lock in an electronic locking system. The private key corresponding to the certificate never leaves the respective device. I.e. a key pair corresponding to a key certificate is generally generated on the key device that is used to operate the lock, and the respective private key never leaves this key device. The same is true with respect to a derived key certificate and a respective key device. This general measure further strengthens the overall security of the system, in particular from the perspective of the lock owner and the lock user.

Alternatively, the public/private key pair corresponding to the derived key certificate can be generated on a key device storing the key certificate from which the derived key certificate is derived. Further alternatively, for a given key certificate, a number of public/private key pairs can be pre-stored at the managing server, in order to be able to generate a derived key certificate. In any case, the derived key certificate, in order to be signed by both the key certificate and the server certificate, has to be transmitted between the key device storing the key certificate and the managing server. This transmission has to be suitably secured and authenticated in order to prevent an attack on the lock that will be operable by the derived key device. Common security measures can be used, e.g. encrypted data communication, usage of a second channel to transmit a secret and/parts of the derived key certificate, and the like. In the same way, the transmission of the newly generated derived key certificate to a new user has to be carried out in a secured and authenticated manner.

The process of generating a derived key certificate can be iterated, meaning that a further derived key certificate can be generated using a derived key certificate for signing (instead of a key certificate). In other words, there can be derived key certificates according to different levels or orders.

A lock that accepts a command that is signed by a key certificate will consequently also accept a command that is signed by a derived key certificate, derived from the respective key certificate. This is because the derived key certificate is signed by the server certificate and at least includes the owner certificate in its chain of trust. In other words, a derived key certificate can basically be used just like the key certificate (or the already derived key certificate of higher order) from which it has been derived, i.e. the key certificate that has been used for signing the derived key certificate, meaning that the derived key certificate allows operating those locks that can be operated by the key certificate from which is has been derived.

However, and preferably, a derived key device can be generated to have less privileges and/or restricted access rights compared to the key certificate from which it has been derived. In particular, it may not be possible to further derive a derived key certificate from an already derived key certificate. Also access rights of a derived key certificate, in particular a period of validity, can be restricted with respect to the key certificate from which it has been derived.

In order to actually operate a lock of the electronic locking system, according to an embodiment, the following steps can be carried out:
A control command for operating the lock is generated. The control command is electronically signed using a key certificate or a derived key certificate. Finally, the signed control command is sent to the lock. In general, control command can be generated by an electronic key device described above. The electronic key device can be configured respectively by downloading a respective application from the locking system managing server.

Basic control commands are commands to open or unlock the lock and to lock the lock. In case of certain commands, e.g. commands that serve to manage the lock (e.g. with respect to the extent to which certain key certificates are accepted), it may be necessary to further sign the command using the server certificate before sending the command. There can also be commands, e.g. a command for adding further owner certificates to the lock, which require to be signed by the owner certificate directly in order to be accepted by the lock.

On the side of the lock, having received a control command, it is checked whether the respective control command is associated with both the owner certificate and the server certificate by verifying whether:
- the key certificate, which has been used to sign the control command, is signed by the server certificate and the owner certificate or
- the derived key certificate, which has been used to sign the control command, is signed by the server certificate and a key certificate that includes in its chain of trust the owner certificate. Only in case of successful verification, the lock accepts the control command; otherwise, the control command is rejected by the lock.

In case the of a specific control command that needs to be directly signed by the server certificate and/or the owner certificate, the lock checks whether the control command is signed by the server certificate and/or the owner certificate, and rejects the control command in case the required signatures are not present.

According to an embodiment, key certificates or derived key certificates can be revoked. To that end, a revocation list can be maintained, e.g. in the managing server (which in turn can distribute the respective list to the locks of the locking system). The revocation list includes identifiers of key certificates to be considered as being revoked. A certificate ID can be used as identifier. The identifier may include further metadata, such as reasons for revocation, date/time of revocation, and the like.

According to an embodiment, a key certificate or a derived key certificate is indicated to be revoked by signing the key certificate identifier by the server certificate and a second key certificate. According to a first alternative, the second key certificate can be the key certificate to be revoked.

According to a second alternative, the second key certificate forms part of the chain of trust of the key certificate to be revoked.

The respectively signed key certificate identifier is then added to the revocation list.

This means that in order to validly revoke a key certificate, on the one hand, approval of the managing server is necessary. On the other hand, the key certificate itself has to approve its revocation, or a key certificate of higher order, i.e. a key certificate from which the key certificate to be revoked has been directly or indirectly derived.

Consequently, in the context of this embodiment, it is checked by the lock, when receiving a control command signed by a key certificate,
- whether an identifier of the key certificate is listed in the revocation list, and, if so
- whether the key certificate identifier in the revocation list is signed both by the server certificate and a second certificate, which second certificate is either equal to the key certificate or forms part of the chain of trust of the key certificate.

In case the key certificate has validly been revoked, the control command is rejected by the lock.

According to another aspect of the invention, an electronic lock for an electronic locking system is provided. The electronic lock is configured to be operated by an electronic key device as described above. The electronic lock is further configured so as to recognize an owner certificate identifying an owner of the electronic lock and a server certificate identifying a managing server of the electronic locking system. Still further, the electronic lock is configured to reject any control command sent to the lock in order to operate the lock in case the control command is not associated with both the owner certificate and the server certificate.

According to an embodiment, the electronic locking system includes, in addition to the above described electronic lock, a locking system managing server. The managing server is configured to directly or indirectly, preferably wirelessly, communicate with the lock. The managing server is identified by the server certificate.

According to an embodiment, the electronic locking system further comprises an electronic key device. The electronic key device is configured to operate the lock and to communicate with the managing server. Preferably, the electronic key device is configured to generate a public/private key pair corresponding to a public key certificate, and to securely store the respective private key.

The electronic locking system may further comprise an electronic owner device, such as a smart card, wherein the electronic owner device is configured to generate and securely store the key pair corresponding to the owner certificate, in case the owner certificate is generated in the form of public key certificate.

Preferably, the electronic locking system is adapted to execute an above-described method for operating an electronic lock.

According to still another aspect of the invention, a computer program product is provided, including a computer program that is stored on a computer readable medium. The computer program is configured, when executed on at least one processor, to carry out the inventive method according to the first aspect.

Every device and every party of the electronic locking system, including locks, should have their public/private key pair for authentication reasons when communicating with each other. E.g. if the managing server issues a command to a lock, not only the lock can be certain who sent the command, but also the managing server can be certain that an answer received in response to the command has been sent by the specific lock. This is especially important when locks are communicating through a proxy device (e.g. when a key device is serving as a proxy for a lock). In general, every device will inform the managing server about its public key / certificate when first initialized (typical, but not limited to owner devices and/or key devices) or when manufactured (typical, but not limited to electronic locks), e.g. by pairing the public key / certificate with device's S/N number or signing their certificate including S/N number with server's certificate or similar mechanism.

Private keys may and should be stored in a respective device (electronic lock, key device, owner device) in a secure manner. To that end, the device may include suitable security element, such as a UICC/SIM-card, a secure memory card, or the like. The security element can either store the private key directly. Alternatively, a secret datum can be stored in the respective security element that is used to encrypt/decrypt a private key. The secret datum can further be protected by a PIN, a password, bio-metrics or similar mechanism.

According to an embodiment, a device of the electronic locking system can be configured to log and report any violation of protocols, such as receiving wrong password/signature via 2nd channel, usage of untrusted key/certificate, etc., as this may indicate an attack on the electronic locking system.

In sum, the present invention provides a number of advantages, in particular as regards the security of the electronic locking system:
The proposed key certificate creation, handling and distribution process ensures that even the provider of the locking system managing server is not able to gain access to customers' locks, while still being able to provide a convenient managing point for all the locks and key devices.

Thus customers' locks won't be affected even in case an unauthorized person (from outside or inside) gains access to the central infrastructure of the managing server. Furthermore, the proposed method minimizes the impact of possible unauthorized usage of a key device, e.g. if the key device gets lost and its content (i.e. private keys) is compromised.

An owner of a lock is not able to make any use of data stored in a lock that is owned by him, i.e. the owner is in particular not able to open other locks that are not owned by him, but owned by additional owners of his lock.

Gaining access to data from a key device does not open a way to create new key certificates for specific locks or to manage these locks in any way.

Gaining access to the managing server's private key does not open a way to operate any lock.

Managing-level operations (e.g. key certificate sharing or lock configuration) are valid only if approved both by the concerned person (owner of the lock; user of the lock) and by the infrastructure service provider (i.e. the provider of the managing server); i.e. locks accept these commands only when digitally signed both by lock owner / authorized key holder and by the managing server.

The characteristics, features and advantages of this invention and the manner in which they are obtained as described above, will become more apparent and be more clearly understood in connection with the following description of exemplary embodiments, which are explained with reference to the accompanying drawings.

### BRIEF DESCRIPTION OF THE DRAWINGS

In the drawings, same element numbers indicate same elements in each of the views:
- Figure 1: illustrates a preferred embodiment of an electronic lock;
- Figure 2: illustrates a preferred embodiment of an electronic locking system including the lock according to Fig. 1; and
- Figure 3: illustrates steps of a preferred embodiment of a method of operating an electronic lock in an electronic locking system according to Fig. 2.

### DESCRIPTION OF THE PREFERRED EMBODIMENTS

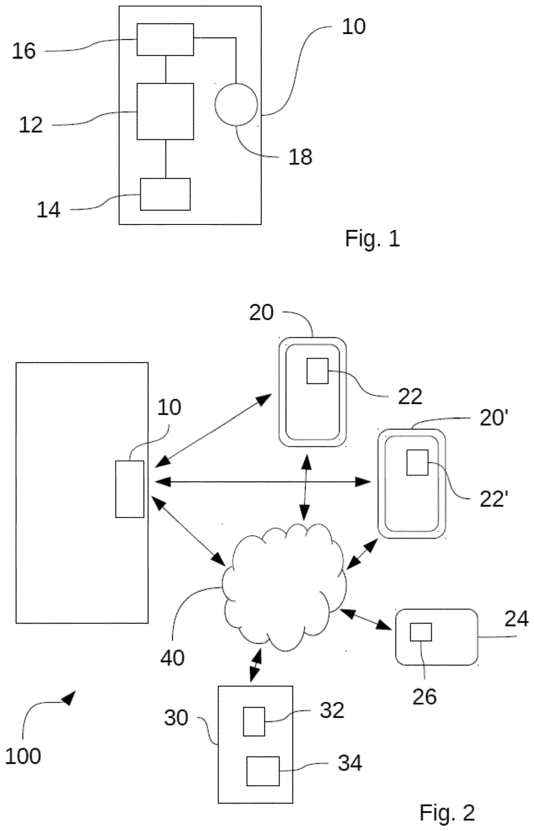

In Fig. 1 an electronic lock 10 is shown in the form of an electronic door lock 10.

The electronic lock 10 includes a control device 12. The control device 12 includes at least one memory to store digital data, such as digital certificates, and a processor that is configured to handle commands sent to the lock as described below in more detail.

The electronic lock is configured to communicate with a managing server 30 and with electronic key devices 20, 20' (cf. Fig. 2) by means of a communication module 14. Preferably, the communication module 14 supports wireless communication, e.g. via Bluetooth, RFID, WiFi, GMS, UMST, LTE, or the like. The communication between the electronic lock 10 and the managing server 30 can also be relayed over an electronic key device 20, 20'.

In order to operate a physical lock 18, which forms part of an electronic door lock 10, the control device 12 is connected with an actuator 16 which in turn is connected to the physical lock 18 and which is configured to operate (open/lock) the physical lock 18 on request of the control device 12.

Fig. 2 illustrates an electronic locking system 100 including the electronic lock 10. Needless to say that the electronic locking system 100 can include a plurality of electronic locks 10.

The electronic locking system 100 further includes an electronic locking system managing server 30 and at least one electronic key device 20, 20'. The managing server 30 and the key devices 20, 20' are configured to communicate over a suitable communication network 40, preferably over the internet.

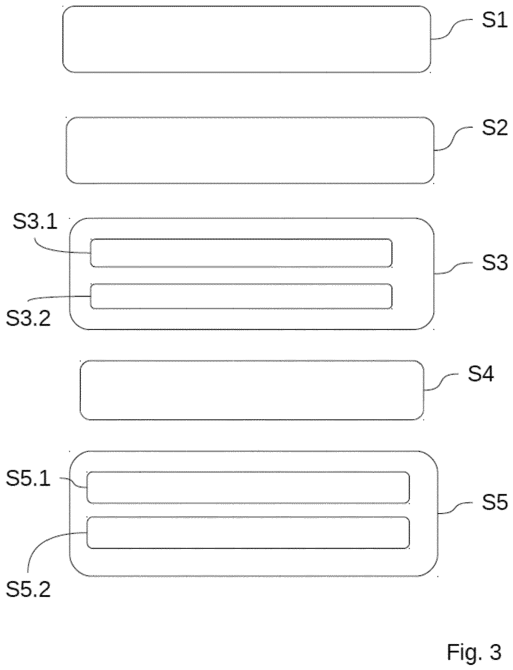

The key devices 20, 20' are configured to operate the lock 10 as described below in more detail with reference to Fig. 3. An electronic key device 20, 20' can e.g. be provided in the form of a smart card, a smart phone, a tablet computer, a smart watch, and the like. In order to operate the lock 10, an electronic key device 20 is configured to communicate with the lock 10, i.e. with the control device 12 of the lock 110 via the communication module 14 of the lock 10, preferably wirelessly, e.g. via Bluetooth or RFID, and to send control commands to the lock. The electronic key device 20 can include a control application (not shown), e.g. in the form of an appropriate app, which is configured to generate and send respective commands to the lock 10. In order to digitally sign the commands before sending, the electronic key device 20, 20' includes a key certificate 20 or a derived key certificate 20' as described below.

Also the managing server 30 includes a specific digital certificate, namely a so called server certificate 32, which identifies the managing server 30 and which is used to digitally sign certain data sets used in the context of the electronic locking system 100 as described below.

Another digital certificate that is necessary in the context of the electronic locking system 100 is the owner certificate 26, which identifies an owner of a specific lock 10, as also described below. The owner certificate 26 can be stored on a separate device, a so called owner device 24, such as a smart card or the like.

Fig. 3 illustrates the basic steps of a method of operating an electronic lock 10 in an electronic locking system 100.

In a first step S1, an owner certificate 36 identifying an owner of the electronic lock 10 is generated.

The owner certificate 26 is generated in the form of public key certificate. A public key of a public key certificate forms part of an asymmetric key pair including the public key and a corresponding private key. The key pair corresponding to the owner certificate 26 can be generated on the electronic owner device 24 and can be stored in the electronic owner device 24. Preferably, the private key corresponding to the owner certificate 26 is securely stored in the owner device 24 and never leaves the electronic owner device 24.

In a second step S2, a server certificate 32 identifying the locking system managing server 30 is generated by the managing server 30.

In a third step S3 the electronic lock 10 is configured so as to recognize the owner certificate 26 and the server certificate 30.

To that end, at least part of the owner certificate 26 and at least part of the server certificate 30 is stored in a memory of the lock 10, prior to operating the lock.

Generally, the public key corresponding to the respective certificates is stored in the lock. The public key of the owner certificate 26 can e.g. be transmitted to the lock 10 when initializing the lock 10 in step S3.1, e.g. when the lock is turned on for the first time. Thereby, the lock 10 is indirectly coupled to the owner device 24, which securely stores the respective private key of the owner certificate.

Also the public key corresponding to the server certificate 32 can be stored in the lock during initialization of the lock 10 in step S3.2.

In step S4 the lock 10 is operated by sending a control command to the lock 10.

The basic control commands are commands to open and lock the lock. In addition, control commands can be provided to manage the lock (e.g. to add additional certificates, to transmit a certificate revocation list, etc.)

In general, a control command is sent to the lock from an electronic key device 20, 20'. Before sending the command, the electronic key device electronically signs the command by means of a key certificate 22 stored in the electronic key device 20, 20'.

A key certificate 22 is generated in the form of a public key certificate and is electronically signed using the owner certificate 26 and the server certificate 32. The electronic key certificate 22 can e.g. be generated on the key device 20 and can be signed by the managing server 30 and additionally signed by the owner of the lock 10 while he is logged on the managing server 30, using the private key of the owner certificate 26 that is securely stored on the owner device 24 for signing the key certificate 22.

In order to ensure secure and authenticated communication, any device of the electronic locking system 100 generally includes public/private key pair in order to allow for encrypted secure communication.

In step S5, the electronic lock 10 checks the received command. Within this process, the lock 10 verifies in step S5.1 whether the command is associated with the owner certificate 26 by checking whether key certificate 22 is signed by the owner certificate 26 or at least by another key certificate that includes in its chain of trust the owner certificate 26.

In step S5.2, the lock 10 further verifies whether the command is also associated with the server certificate 32 by checking whether the key certificate 22 is signed by the server certificate 32. The lock 10 rejects any control command that is not associated with both the owner certificate 26 and the server certificate 32.

In the electronic locking system 100 key certificates 22 can be in some sense "shared", namely by generating new key certificates 22' that are derived from already existing key certificates 22. In order to generate a derived key certificate 22', a general public key certificate is generated and signed by means of the key certificate 22 from which the derived key certificate 22' is derived. The derived key certificate 22' has further to be signed by means of the server certificate 32. By means of such a derived key certificate 22', any lock 10 that can be operated by means of the key certificate 22 can also be operated by means of the derived key certificate 22', because the latter is signed by the server certificate 32 and includes in its chain of trust the owner certificate (because the key certificate 22 includes in its chain of trust the owner certificate 26).

The electronic locking system 100 further supports revocation of key certificates 22 (or derived key certificates 22'). To that end, a revocation list 34 can be stored and managed in the managing server 30. This revocation list can be transmitted to the locks 10 of the system 100 in order to allow them to check whether a key certificate 22, 22' that has been used to sign a command is still valid or has already been revoked.

Only those key certificates 22' listed in the revocation list 34 in the form of respective certificate identifiers that are both signed by the server certificate 32 and by a further key certificate 22, 22' are considered to be validly revoked when checked by a lock 10, which further key certificate 22, 22' is equal to the key certificate 22' or forms part of the chain of trust of the key certificate 22.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

Preferred embodiments of the present invention are listed below in the form of numbered items. These embodiments must not be confused with the appended claims.
1. A method of operating an electronic lock in an electronic locking system, the electronic locking system comprising an electronic lock that is operable by an electronic key device, and a locking system managing server,
   wherein the managing server is configured to directly or indirectly, preferably wirelessly communicate with the lock and with the electronic key device,
   the method comprising the step of:
   - generating an owner certificate identifying an owner of the electronic lock;
   - generating a server certificate identifying the locking system managing server;
   - configuring the lock so as to recognize the owner certificate and the server certificate,
   - operating the lock by sending a control command to the lock,
   wherein the lock rejects any control command that is not associated with both the owner certificate and the server certificate.
2. The method according to item 1, wherein the owner certificate and the server certificate are generated in the form of public key certificates, wherein a public key of a public key certificate forms part of an asymmetric key pair including the public key and a corresponding private key.
3. The method according to item 2, wherein the key pair corresponding to the owner certificate is generated on an electronic owner device and is stored in the electronic owner device.
4. The method according to item 3, wherein the private key corresponding to the owner certificate is securely stored in the owner device and never leaves the electronic owner device, thereby indirectly coupling the lock to the electronic owner device.
5. The method according to any of items 1 to 4, wherein the electronic lock is configured so as to recognize the owner certificate and the server certificate by storing at least part of the owner certificate and at least part of the server certificate in a memory of the lock prior to operating the lock; a preferred part of the respective certificate to be stored is the public key corresponding to the respective certificate.
6. The method according to any one of items 1 to 5, comprising the steps of:
   - generating a key certificate in the form of a public key certificate;
   - electronically signing the key certificate using the owner certificate and the server certificate.
7. The method according to item 6, further comprising the steps of:
   - generating a derived key certificate in the form of a public key certificate;
   - electronically signing the derived key certificate using the key certificate and the server certificate.
8. The method according to any one of items 6 to 7, wherein a key pair corresponding to the key certificate (22) or the derived key certificate (22') is generated on the device on which it is used later on in connection with the method of operating an electronic lock (10) in an electronic locking system (100), wherein the private key corresponding the certificate never leaves the respective device.
9. The method according to any one of items 6 to 8, wherein the key certificate or the derived key certificate further include metadata, such as:
   - key privileges, in particular regrading the right to validly sign a derived key certificate;
   - access rights, e.g. with respect to regional and/or temporal restrictions by defining zones, dates, times, duration, period of validity, etc.
10. The method of any one of items 6 to 9, further comprising the steps of:
   - generating a control command for operating the lock;
   - electronically signing the control command using the key certificate or the derived key certificate;
   - sending the signed control command to the lock.
11. The method of item 10, further comprising the step of:
   - electronically signing the control command using the server certificate before sending the command, in particular in the context of a managing control command.
12. The method of item 10 or 11, further comprising the step of:
   - electronically signing the control command using the owner certificate before sending the command, in particular in the context of a managing control command.
13. The method according to any one of items 10 to 12, further comprising the steps of:
   - checking, by the lock, whether the control command is associated with both the owner certificate and the server certificate by verifying whether:
   - the key certificate is signed by the server certificate and the owner certificate or
   - the derived key certificate is signed by the server certificate and a key certificate that includes in its chain of trust the owner certificate.
14. The method of items 11 and 13, further comprising the step of:
   - checking, by the lock, whether the control command is signed by the server certificate; and
   - rejecting the control command in case the control command is not signed by the server certificate.
15. The method of items 12 and 13, further comprising the step of:
   - checking, by the lock, whether the control command is signed by the owner certificate; and
   - rejecting the control command in case the control command is not signed by the owner certificate.
16. The method of any of items 6 to 15, further comprising the step of
   - revoking a key certificate by
   - signing an identifier of the key certificate by the server certificate and a second key certificate, wherein the second key certificate is equal to the key certificate or forms part of the chain of trust of the key certificate; and
   - listing the signed key certificate identifier in a revocation list.
17. The method of item 16, further comprising the step of, at the lock, when receiving a control command signed by a key certificate,
   - checking whether an identifier of the key certificate is listed in the revocation list, and, if so
   - verifying whether the key certificate identifier in the revocation list is signed both by the server certificate and a second certificate that is either equal to the key certificate or that forms part of the chain of trust of the key certificate and
   - rejecting the control command in case the key certificate has validly been revoked.
18. An electronic lock for an electronic locking system, the electronic lock being configured to be operated by an electronic key device, wherein the electronic lock is configured so as to recognize an owner certificate identifying an owner of the electronic lock and a server certificate identifying a managing server of the electronic locking system, and configured to reject any control command sent to the lock in order to operate the lock that is not associated with both the owner certificate and the server certificate.
19. An electronic locking system comprising
   - the electronic lock according to item 18, and
   - a locking system managing server,
   wherein the managing server is configured to directly or indirectly, preferably wirelessly, communicate with the lock and the electronic key device, and is identified by the server certificate.
20. The electronic locking system according to item 19, further comprising an electronic key device configured to operate the lock by
   - generating a control command;
   - signing the control command by means of a key certificate stored in the electronic key device; and
   - sending the signed command to the lock.
21. The electronic locking system according to item 19 or 20, further comprising an electronic owner device, such as a smart card, wherein the owner certificate is generated in the form of a public key certificate, wherein a public key of a public key certificate forms part of an asymmetric key pair including the public key and a corresponding private key, and wherein the electronic owner device is configured to generate and store the key pair corresponding to the owner certificate.
22. The electronic locking system according to any one of items 19 to 21, adapted to execute a method according to any one of items 1 to 17.
23. Computer program product, including a computer program that is stored on a computer readable medium, wherein the computer program is configured, when executed on at least one processor, to carry out a method according to any one of items 1 to 17.

### LIST OF REFERENCE SIGNS

- 10: electronic lock
- 12: control device
- 14: communication module
- 16: actuator
- 18: physical lock
- 20, 20': key device
- 22: key certificate
- 22': derived key certificate
- 24: owner device
- 26: owner certificate
- 30: locking system managing server
- 32: server certificate
- 34: revocation list
- 40: communication network
- 100: electronic locking system
- S1, S2, S3, S3.1, S3.2, S4, S5, S5.1, S5.2: method steps

## Claims

1. A method of operating an electronic lock (10) in an electronic locking system (100), the electronic locking system (100) comprising the electronic lock (10) that is operable by an electronic key device (20; 20'), and a locking system managing server (30), wherein the managing server (30) is configured to communicate with the lock (10), the method comprising the step of:
- generating (S1) an owner certificate (26) identifying an owner of the electronic lock (10);
- generating (S2) a server certificate (32) identifying the locking system managing server (30),
wherein the owner certificate (26) and the server certificate (32) are generated in the form of public key certificates, wherein a public key of a public key certificate forms part of an asymmetric key pair including the public key and a corresponding private key;
- configuring (S3) the lock (10) so as to recognize the owner certificate (26) and the server certificate (30) by storing at least the public key of the owner certificate (26) and at least the public key of the server certificate (32) in a memory of the lock,
- operating (S4) the lock (10) by sending a control command to the lock (10),
wherein the lock (10) rejects any control command that is not associated with both the owner certificate (26) and the server certificate (32), wherein the control command is meant to be associated with the server certificate in case it is directly or indirectly, via a chain of further certificates, signed by means of the private key of the server certificate, and wherein the control command is meant to be associated with the owner certificate in case the control command is directly or indirectly, via a chain of further certificates, signed by means of the private key of the owner certificate.

2. The method according to any one of claim 1, comprising the steps of:
- generating a key certificate (22) in the form of a public key certificate;
- electronically signing the key certificate (22) using the private key of the owner certificate (26) and the private key of the server certificate (32).

3. The method according to claim 2, further comprising the steps of:
- generating a derived key certificate (22') in the form of a public key certificate;
- electronically signing the derived key certificate (22') using the private key of the key certificate (22) and the private key of the server certificate (32).

4. The method according to any one of claims 1 to 3, wherein a key pair corresponding to a certificate in the form of a public key certificate, in particular to the owner certificate (26), the key certificate (22), or the derived key certificate (22'), is generated on the device on which it is used later on in connection with the method of operating an electronic lock (10) in an electronic locking system (100), wherein the private key corresponding the certificate never leaves the respective device.

5. The method of any one of claims 2 to 4, further comprising the steps of:
- generating a control command for operating the lock (10);
- electronically signing the control command using the private key of the key certificate (22) or the private key of the derived key certificate (22');
- sending the signed control command to the lock (10).

6. The method of claim 5, further comprising the step of:
- electronically signing the control command using the private key of the server certificate (32) and/or electronically signing the control command using the private key of the owner certificate (26) before sending the signed command.

7. The method according to any one of claims 5 to 6, further comprising the steps of:
- checking (S5), by the lock (10), whether the control command is associated with both the owner certificate (26) and the server certificate (32) by verifying whether:
- the key certificate (22) is signed by the private key of the server certificate (32) and the private key of the owner certificate (26) or
- the derived key certificate (22') is signed by the private key of the server certificate (32) and the private key of a key certificate (22) that includes in its chain of trust the owner certificate (26).

8. The method of claims 6 and 7, further comprising the step of:
- checking, by the lock (10), whether the control command is signed by the private key of the server certificate (32); and/or
- checking, by the lock, whether the control command is signed by the private key of the owner certificate (26).

9. The method of any of claims 2 to 8, further comprising the step of
- revoking a key certificate (22') by
- signing an identifier of the key certificate (22') by the private key of the server certificate (32) and the private key of a second key certificate (22; 22'), wherein the second key certificate (22') is equal to the key certificate (22') or forms part of the chain of trust of the key certificate (22); and
- listing the signed key certificate (22') identifier in a revocation list (34).

10. An electronic lock (10) for an electronic locking system (100), the electronic lock (10) being configured to be operated by an electronic key device (20), wherein the electronic lock (10) is
- configured so as to recognize an owner certificate (26) identifying an owner of the electronic lock (10) and a server certificate (32) identifying a managing server (30) of the electronic locking system (100) by storing at least the public key of the owner certificate (26) and at least the public key of the server certificate (32) in a memory of the lock, wherein the owner certificate (26) and the server certificate (32) are generated in the form of public key certificates, wherein a public key of a public key certificate forms part of an asymmetric key pair including the public key and a corresponding private key, and
- configured to reject any control command that is not associated with both the owner certificate (26) and the server certificate (32), wherein the control command is meant to be associated with the server certificate in case it is directly or indirectly, via a chain of further certificates, signed by means of the private key of the server certificate, and wherein the control command is meant to be associated with the owner certificate in case the control command is directly or indirectly, via a chain of further certificates, signed by means of the private key of the owner certificate.

11. An electronic locking system (100) comprising
- at least one electronic lock (10) according to claim 10, and
- a locking system managing server (30),
wherein the managing server (30) is configured to communicate with the at least one lock (10), and is identified by the server certificate (32).

12. The electronic locking system (100) according to claim 11, further comprising an electronic key device (20; 20') configured to operate the at least one lock (10), where the locking system is adapted to execute a method according to any one of claims 1 to 9.

13. Computer program product, including a computer program that is stored on a computer readable medium, wherein the computer program is configured, when executed on at least one processor, to carry out a method according to any one of claims 1 to 9.

## Patentansprüche

1. Verfahren zum Bedienen einer elektronischen Verriegelung (10) in einem elektronischen Verriegelungssystem (100), wobei das elektronische Verriegelungssystem (100) die elektronische Verriegelung (10), die durch eine elektronische Schlüsselvorrichtung (20; 20') bedienbar ist, und einen Verriegelungssystem-Verwaltungsserver (30) umfasst, wobei der Verwaltungsserver (30) dazu konfiguriert ist, mit der Verriegelung (10) zu kommunizieren, wobei das Verfahren die Schritte umfasst:
- Erzeugen (S1) eines Inhaberzertifikats (26), das einen Inhaber der elektronischen Verriegelung (10) ausweist;
- Erzeugen (S2) eines Serverzertifikats (32), das den Verriegelungssystem-Verwaltungsserver (30) ausweist,
wobei das Inhaberzertifikat (26) und das Serverzertifikat (32) in Form von Public-Key-Zertifikaten erzeugt werden, wobei ein öffentlicher Schlüssel eines Public-Key-Zertifikats einen Bestandteil eines asymmetrischen Schlüsselpaares mit dem öffentlichen Schlüssel und einem entsprechenden privaten Schlüssel bildet;
- Konfigurieren (S3) der Verriegelung (10), so dass diese das Inhaberzertifikat (26) und das Serverzertifikat (30) erkennt, indem mindestens der öffentliche Schlüssel des Inhaberzertifikats (26) und mindestens der öffentliche Schlüssel des Serverzertifikats (32) in einem Speicher der Verriegelung gespeichert werden,
- Bedienen (S4) der Verriegelung (10) durch Senden eines Steuerbefehls an die Verriegelung (10), wobei die Verriegelung (10) jeglichen Steuerbefehl ablehnt, der nicht sowohl mit dem Inhaberzertifikat (26) als auch dem Serverzertifikat (32) verknüpft ist, wobei der Steuerbefehl als mit dem Serverzertifikat verknüpft angesehen werden soll, falls dieser direkt oder indirekt über eine Kette weiterer Zertifikate mittels des privaten Schlüssels des Serverzertifikats signiert ist, und wobei der Steuerbefehl als mit dem Inhaberzertifikat verknüpft angesehen werden soll, falls der Steuerbefehl direkt oder indirekt über eine Kette weiterer Zertifikate mittels des privaten Schlüssels des Inhaberzertifikats signiert ist.

2. Verfahren nach Anspruch 1, umfassend die folgenden Schritte:
- Erzeugen eines Schlüsselzertifikats (22) in Form eines Public-Key-Zertifikats;
- elektronisches Signieren des Schlüsselzertifikats (22) unter Verwendung des privaten Schlüssels des Inhaberzertifikats (26) und des privaten Schlüssels des Serverzertifikats (32).

3. Verfahren nach Anspruch 2, ferner umfassend die folgenden Schritte:
- Erzeugen eines abgeleiteten Schlüsselzertifikats (22') in Form eines Public-Key-Zertifikats;
- elektronisches Signieren des abgeleiteten Schlüsselzertifikats (22') unter Verwendung des privaten Schlüssels des Schlüsselzertifikats (22) und des privaten Schlüssels des Serverzertifikats (32).

4. Verfahren nach einem der Ansprüche 1 bis 3, wobei ein Schlüsselpaar, das einem Zertifikat in Form eines Public-Key-Zertifikats, insbesondere dem Inhaberzertifikat (26), dem Schlüsselzertifikat (22) oder dem abgeleiteten Schlüsselzertifikat (22'), entspricht, auf der Vorrichtung erzeugt wird, auf der es später in Verbindung mit dem Verfahren zum Bedienen einer elektronischen Verriegelung (10) in einem elektronischen Verriegelungssystem (100) verwendet wird, wobei der dem Zertifikat entsprechende private Schlüssel die jeweilige Vorrichtung nie verlässt.

5. Verfahren nach einem der Ansprüche 2 bis 4, ferner umfassend die folgenden Schritte:
- Erzeugen eines Steuerbefehls zum Bedienen der Verriegelung (10);
- elektronisches Signieren des Steuerbefehls unter Verwendung des privaten Schlüssels des Schlüsselzertifikats (22) oder des privaten Schlüssels des abgeleiteten Schlüsselzertifikats (22').
- Senden des signierten Steuerbefehls an die Verriegelung (10).

6. Verfahren nach Anspruch 5, ferner umfassend den folgenden Schritt:
- elektronisches Signieren des Steuerbefehls unter Verwendung des privaten Schlüssels des Serverzertifikats (32) und/oder elektronisches Signieren des Steuerbefehls unter Verwendung des privaten Schlüssels des Inhaberzertifikats (26) vor dem Senden des signierten Befehls.

7. Verfahren nach einem der Ansprüche 5 bis 6, ferner umfassend die folgenden Schritte:
- Kontrollieren (S5) durch die Verriegelung (10), ob der Steuerbefehl sowohl mit dem Inhaberzertifikat (26) als auch mit dem Serverzertifikat (32) verknüpft ist, durch Überprüfen, ob:
- das Schlüsselzertifikat (22) mit dem privaten Schlüssel des Serverzertifikats (32) und dem privaten Schlüssel des Inhaberzertifikats (26) signiert ist oder
- das abgeleitete Schlüsselzertifikat (22') mit dem privaten Schlüssel des Serverzertifikats (32) und dem privaten Schlüssel eines Schlüsselzertifikats (22), das in seiner Vertrauenskette das Inhaberzertifikat (26) aufweist, signiert ist.

8. Verfahren nach Anspruch 6 und 7, ferner umfassend den folgenden Schritt:
- Kontrollieren durch die Verriegelung (10), ob der Steuerbefehl mit dem privaten Schlüssel des Serverzertifikats (32) signiert ist; und/oder
- Kontrollieren durch die Verriegelung, ob der Steuerbefehl mit dem privaten Schlüssel des Inhaberzertifikats (26) signiert ist.

9. Verfahren nach einem der Ansprüche 2 bis 8, ferner umfassend die folgenden Schritte:
- Widerrufen eines Schlüsselzertifikats (22') durch
- Signieren eines Identifikators des Schlüsselzertifikats (22') durch den privaten Schlüssel des Serverzertifikats (32) und den privaten Schlüssel eines zweiten Schlüsselzertifikats (22; 22'), wobei das zweite Schlüsselzertifikat (22') gleich dem Schlüsselzertifikat (22') ist oder einen Teil der Vertrauenskette des Schlüsselzertifikats (22) bildet; und
- Auflisten des signierten Identifikators des Schlüsselzertifikats (22') in einer Widerrufsliste (34).

10. Elektronische Verriegelung (10) für ein elektronisches Verriegelungssystem (100), wobei die elektronische Verriegelung (10) dazu konfiguriert ist, durch eine elektronische Schlüsselvorrichtung (20) bedient zu werden, wobei die elektronische Verriegelung (10)
- konfiguriert ist, so dass sie ein Inhaberzertifikat (26), das einen Inhaber der elektronischen Verriegelung (10) ausweist, und ein Serverzertifikat (32), das einen Verwaltungsserver (30) des elektronischen Verriegelungssystems (100) ausweist, erkennt, indem mindestens der öffentliche Schlüssel des Inhaberzertifikats (26) und mindestens der öffentliche Schlüssel des Serverzertifikats (32) in einem Speicher der Verriegelung gespeichert werden, wobei das Inhaberzertifikat (26) und das Serverzertifikat (32) in Form von Public-Key-Zertifikaten erzeugt werden, wobei ein öffentlicher Schlüssel eines Public-Key-Zertifikats einen Bestandteil eines asymmetrischen Schlüsselpaares mit dem öffentlichen Schlüssel und einem entsprechenden privaten Schlüssel bildet, und
- konfiguriert ist, um jeglichen Steuerbefehl abzulehnen, der nicht sowohl mit dem Inhaberzertifikat (26) als auch dem Serverzertifikat (32) verknüpft ist, wobei der Steuerbefehl als mit dem Serverzertifikat verknüpft angesehen werden soll, falls er direkt oder indirekt über eine Kette weiterer Zertifikate mittels des privaten Schlüssels des Serverzertifikats signiert ist, und wobei der Steuerbefehl als mit dem Inhaberzertifikat verknüpft angesehen werden soll, falls der Steuerbefehl direkt oder indirekt über eine Kette weiterer Zertifikate mittels des privaten Schlüssels des Inhaberzertifikats signiert ist.

11. Elektronisches Verriegelungssystem (100), umfassend:
- mindestens eine elektronische Verriegelung (10) nach Anspruch 10 und
- einen Verriegelungssystem-Verwaltungsserver (30),
wobei der Verwaltungsserver (30) dazu konfiguriert ist, mit der mindestens einen Verriegelung (10) zu kommunizieren, und durch das Serverzertifikat (32) ausgewiesen ist.

12. Elektronisches Verriegelungssystem (100) nach Anspruch 11, ferner umfassend eine elektronische Schlüsselvorrichtung (20; 20'), die dazu konfiguriert ist, die mindestens eine Verriegelung (10) zu bedienen, wobei das Verriegelungssystem dazu eingerichtet ist, ein Verfahren nach einem der Ansprüche 1 bis 9 auszuführen.

13. Computerprogrammprodukt mit einem Computerprogramm, das auf einem computerlesbaren Medium gespeichert ist, wobei das Computerprogramm dazu konfiguriert ist, bei Ausführung durch mindestens einen Prozessor ein Verfahren nach einem der Ansprüche 1 bis 9 auszuführen.

## Revendications

1. Procédé d'actionnement d'un verrou électronique (10) dans un système de verrouillage électronique (100), le système de verrouillage électronique (100) comprenant le verrou électronique (10) pouvant être actionné par un dispositif à clé électronique (20 ; 20'), et un serveur de gestion (30) du système de verrouillage, le serveur de gestion (30) étant conçu pour communiquer avec le verrou (10), le procédé comprenant les étapes consistant ;
- à générer (S1) un certificat de propriétaire (26) identifiant un propriétaire du verrou électronique (10) ;
- à générer (S2) un certificat de serveur (32) identifiant le serveur de gestion (30) du système de verrouillage, le certificat de propriétaire (26) et le certificat de serveur (32) étant générés sous la forme de certificats de clé publique, une clé publique d'un certificat de clé publique faisant partie d'une paire de clés asymétrique comprenant la clé publique et une clé privée correspondante ;
- à configurer (S3) le verrou (10) de manière à reconnaître le certificat de propriétaire (26) et le certificat de serveur (30) au moyen de la mémorisation d'au moins la clé publique du certificat de propriétaire (26) et d'au moins la clé publique du certificat de serveur (32) dans une mémoire du verrou ;
- à actionner (S4) le verrou (10) au moyen de l'envoie d'une commande de contrôle au verrou (10), le verrou (10) rejetant toute commande de contrôle non associée à la fois au certificat de propriétaire (26) et au certificat de serveur (32), la commande de contrôle étant censée être associée au certificat de serveur lorsque ladite commande de contrôle, directement ou indirectement, par l'intermédiaire d'une chaîne de certificats supplémentaires, est signée au moyen de la clé privée du certificat de serveur, et la commande de contrôle étant censée être associée au certificat de propriétaire lorsque ladite commande de contrôle, directement ou indirectement, par l'intermédiaire d'une chaîne de certificats supplémentaires, est signée au moyen de la clé privée du certificat de propriétaire.

2. Procédé selon la revendication 1, comprenant les étapes consistant :
- à générer un certificat de clé (22) sous la forme d'un certificat de clé publique ;
- à signer électroniquement le certificat de clé (22) à l'aide de la clé privée du certificat de propriétaire (26) et de la clé privée du certificat de serveur (32).

3. Procédé selon la revendication 2, comprenant en outre les étapes consistant :
- à générer un certificat de clé (22') dérivé sous la forme d'un certificat de clé publique ;
- à signer électroniquement le certificat de clé (22') dérivé à l'aide de la clé privée du certificat de clé (22) et de la clé privée du certificat de serveur (32).

4. Procédé selon l'une quelconque des revendications 1 à 3, une paire de clés, correspondant à un certificat sous la forme d'un certificat de clé publique, en particulier au certificat de propriétaire (26), au certificat de clé (22) ou au certificat de clé (22') dérivé, étant générée sur le dispositif sur lequel ladite paire de clés est utilisée ultérieurement en relation avec le procédé d'actionnement d'un verrou électronique (10) dans un système de verrouillage électronique (100), la clé privée correspondant au certificat ne quittant jamais l'appareil respectif.

5. Procédé selon l'une quelconque des revendications 2 à 4, comprenant en outre les étapes consistant :
- à générer une commande de contrôle destinée à actionner le verrou (10) ;
- à signer électroniquement la commande de contrôle à l'aide de la clé privée du certificat de clé (22) ou de la clé privée du certificat de clé (22') dérivé ;
- à envoyer la commande de contrôle signée au verrou (10).

6. Procédé selon la revendication 5, comprenant en outre l'étape consistant :
- à signer électroniquement la commande de contrôle à l'aide de la clé privée du certificat de serveur (32) et / ou à signer électroniquement la commande de contrôle à l'aide de la clé privée du certificat de propriétaire (26) avant envoie de la commande signée.

7. Procédé selon l'une quelconque des revendications 5 à 6, comprenant en outre les étapes consistant :
- à vérifier (S5), à l'aide du verrou (10), si la commande de contrôle est associée à la fois au certificat de propriétaire (26) et au certificat de serveur (32) au moyen de la vérification :
- si le certificat de clé (22) est signé par la clé privée du certificat de serveur (32) et par la clé privée du certificat de propriétaire (26) ou
- si le certificat de clé (22') dérivé est signé par la clé privée du certificat de serveur (32) et par la clé privée d'un certificat de clé (22), lequel inclut dans sa chaîne de confiance le certificat de propriétaire (26).

8. Procédé selon les revendications 6 et 7, comprenant en outre l'étape consistant :
- à vérifier, à l'aide du verrou (10), si la commande de contrôle est signée par la clé privée du certificat de serveur (32) ; et / ou
- à vérifier, à l'aide du verrou, si la commande de contrôle est signée par la clé privée du certificat de propriétaire (26).

9. Procédé selon l'une quelconque des revendications 2 à 8, comprenant en outre l'étape consistant :
- à révoquer un certificat de clé (22') au moyen de
- la signature d'un identifiant du certificat de clé (22') à l'aide de la clé privée du certificat de serveur (32) et de la clé privée d'un deuxième certificat de clé (22 ; 22'), le deuxième certificat de clé (22') étant égal au certificat de clé (22') ou faisant partie de la chaîne de confiance du certificat de clé (22) ; et
- à lister l'identifiant du certificat de clé (22') signé dans une liste de révocation (34).

10. Verrou électronique (10) pour un système de verrouillage électronique (100), le verrou électronique (10) étant conçu pour être actionnée par un dispositif à clé électronique (20), le verrou électronique (10) étant
- conçu pour reconnaître un certificat de propriétaire (26) identifiant un propriétaire du verrou électronique (10) et un certificat de serveur (32) identifiant un serveur de gestion (30) du système de verrouillage électronique (100) au moyen de la mémorisation d'au moins la clé public du certificat de propriétaire (26) et d'au moins la clé publique du certificat de serveur (32) dans une mémoire du verrou, le certificat de propriétaire (26) et le certificat de serveur (32) étant générés sous la forme de certificats de clé publique, une clé publique d'un certificat de clé publique faisant partie d'une paire de clés asymétrique comprenant la clé publique et une clé privée correspondante, et
- conçu pour rejeter toute commande de contrôle non associée à la fois au certificat de propriétaire (26) et au certificat de serveur (32), la commande de contrôle étant censée être associée au certificat de serveur lorsque ladite commande de contrôle, directement ou indirectement, par l'intermédiaire d'une chaîne de certificats supplémentaires, est signée à l'aide de la clé privée du certificat de serveur, et la commande de contrôle étant censée être associée au certificat de propriétaire lorsque ladite commande de contrôle, directement ou indirectement, par l'intermédiaire d'une chaîne de certificats supplémentaires, est signée à l'aide de la clé privée du certificat de propriétaire.

11. Système de verrouillage électronique (100) comprenant :
- au moins un verrou électronique (10) selon la revendication 10 ; et
- un serveur de gestion du système de verrouillage (30),
le serveur de gestion (30) étant conçu pour communiquer avec l'au moins un verrou (10) et ledit serveur de gestion étant identifié par le certificat de serveur (32).

12. Système de verrouillage électronique (100) selon la revendication 11, comprenant en outre un dispositif de clé électronique (20 ; 20') conçu pour actionner l'au moins un verrou (10), le système de verrouillage étant conçu pour exécuter un procédé selon l'une quelconque des revendications 1 à 9.

13. Produit de programme informatique, comprenant un programme informatique mémorisé sur un support lisible par ordinateur, le programme informatique étant conçu, lorsqu'il est exécuté sur au moins un processeur, pour mettre en oeuvre un procédé selon l'une quelconque des revendications 1 à 9.
